# EUROPÄISCHE PATENTANMELDUNG

(11) **EP 1 034 973 A2**
(43) Veröffentlichungstag der Anmeldung: **13.09.2000**
(21) Anmeldenummer: 00101827.4
(22) Anmeldetag: 29.01.2000
(51) Int. Cl.: B60N 2/16

(54) **Höhenverstellbarer Fahrzeugsitz**

(30) Priorität: 08.03.1999 DE 19910081
(71) Anmelder: DaimlerChrysler AG, 70567 Stuttgart (DE)
(72) Erfinder: Schmidt, Bernd, 72218 Wildberg (DE); Schrom, Ralf-Henning, 72108 Rottenburg (DE); Schulz, Volkmar, 96479 Weitransdorf (DE); Shephard, Philip C., Birmingham B28 0QR (GB)

(57) **Zusammenfassung**

Die Erfindung bezieht sich auf einen Fahrzeugsitz mit einem höhenverstellbar über einem Sitzuntergestell angeordneten Sitzrahmen, an dem ein Rückenlehnenteil angebracht ist und ein Sitzkissentragteil zur Einstellung der Sitzkissentiefe mit einem Endbereich verschiebebeweglich in zwei Führungen gelagert ist, wobei der andere Endbereich des Sitzkissentragteils über zwei weitere Führungen abgestützt ist.

Erfindungsgemäß sind die weiteren Führungen über eine Stützkonstruktion am Sitzrahmen vorbei direkt am Sitzuntergestell abgestützt sind.

## Beschreibung

Die Erfindung betrifft einen Fahrzeugsitz mit einem höhenverstellbar über dem Sitzuntergestell angeordneten Sitzrahmen nach dem Oberbegriff des Patentanspruchs 1.

Eine solcher, der DE 42 24 458 A1 zu entnehmender Fahrzeugsitz weist ein zur Einstellung der Sitzkissentiefe verschiebebewegliches Sitzkissentragteil auf, das über vier Führungen am Sitzrahmen abgestützt ist. Bei der Belastung des Fahrzeugsitzes durch einen Insassen muß der Sitzrahmen erhebliche Kräfte aufnehmen, was eine sehr stabile Dimensionierung und die Verwendung entsprechend biegesreifer Rahmenprofile erforderlich macht. Dies gilt insbesondere auch, weil bei einem Unfall deutlich stärkere Kräfte vom Insassen auf den Fahrzeugsitz übertragen werden.

Aufgabe der Erfindung ist es, einen Fahrzeugsitz mit einem höhenverstellbar über dem Sitzuntergestell angeordneten Sitzrahmen der im Oberbegriff des Patentanspruchs 1 angegebenen Art zu schaffen, dessen Sitzrahmen bei Gewährleistung einer ausreichenden Abstützung des Sitzkissentragteils geringer dimensioniert werden kann.

Diese Aufgabe wird erfindungsgemäß durch einen Fahrzeugsitz mit den Merkmalen des Patentenspruchs 1 gelöst.

Bei dem Fahrzeugsitz nach der Erfindung wird der Sitzrahmen durch die Abstützung eines Endbereichs des Sitzkissentragteils direkt am Sitzuntergestell deutlich entlastet. Dabei kann insbesondere der vordere Endabschnitt des Sitzkissentragteils am Sitzuntergestell abgestützt werden. Im Ergebnis kann dadurch sowohl das Rahmenprofil des Sitzrahmens kleiner dimensioniert als auch die Bauhöhe des Sitzrahmens mit dem Sitzkissentragteil verringert werden.

Vorteilhafte Ausführungsformen des erfindungsgemäßen Fahrzeugsitzes mit zweckmäßigen Weiterbildungen der Erfindung sind in den Unteransprüchen angegeben.

So hat es sich als insbesondere vorteilhaft gezeigt, wenn die Stützkonstruktion bei der Höhenverstellung des Fahrzeugsitzes mit dem Sitzrahmen bewegt ist. Somit wird verhindert, daß eine Höhenverstellung des Sitzrahmens zu einer einseitigen Anhebung oder Absenkung des Sitzkissentragteils führt; vielmehr werden beide Endabschnitte des Sitzkissentragteils um annähernd dieselbe Höhe angehoben.

Insbesondere von Vorteil ist es zudem, wenn die Stützkonstruktion eine Neigungsverstelleinrichtung umfaßt, mit der die Neigung des Sitzkissentragteils eingestellt und damit der Sitzkomfort für einen Insassen erhöht werden kann. Dabei hat sich eine an der Querstange der Höhenverstelleinrichtung angeordnete Rahmenschwinge als besonders stabile Abstützung des vorderen Endbereichs des Sitzkissentragteils erwiesen.

Schließlich ist es von Vorteil, des Sitzkissentragteil gegenüber dem Sitzrahmen und der Stützkonstruktion verschiebbar und mittels eines Spindelantriebs längsverfahrbar zu gestalten, der auf besonders platzsparende Weise an der Unterseite des Sitzkissentragteils befestigbar ist.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig. 1: eine Perspektivansicht auf ein Sitzuntergestell des Fahrzeugsitzes nach einer bevorzugten Ausführungsform der Erfindung;
- Fig. 2: eine Perspektivansicht auf das Sitzuntergestell und einen über diesem angeordneten Sitzrahmen des Fahrzeugsitzes nach einer bevorzugten Ausführungsform der Erfindung;
- Fig. 3: eine schematische Seitenansicht auf den über dem Sitzuntergestell liegenden Sitzrahmen und einem an diesen verschiebebeweglich angeordneten Sitzkissentragteil des erfindungsgemäßen Fahrzeug sitzes.

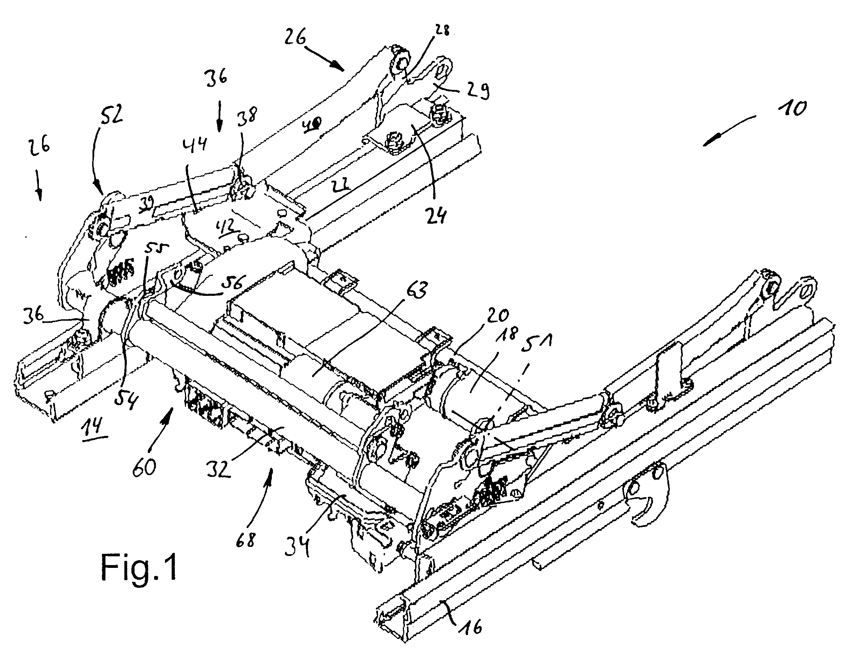

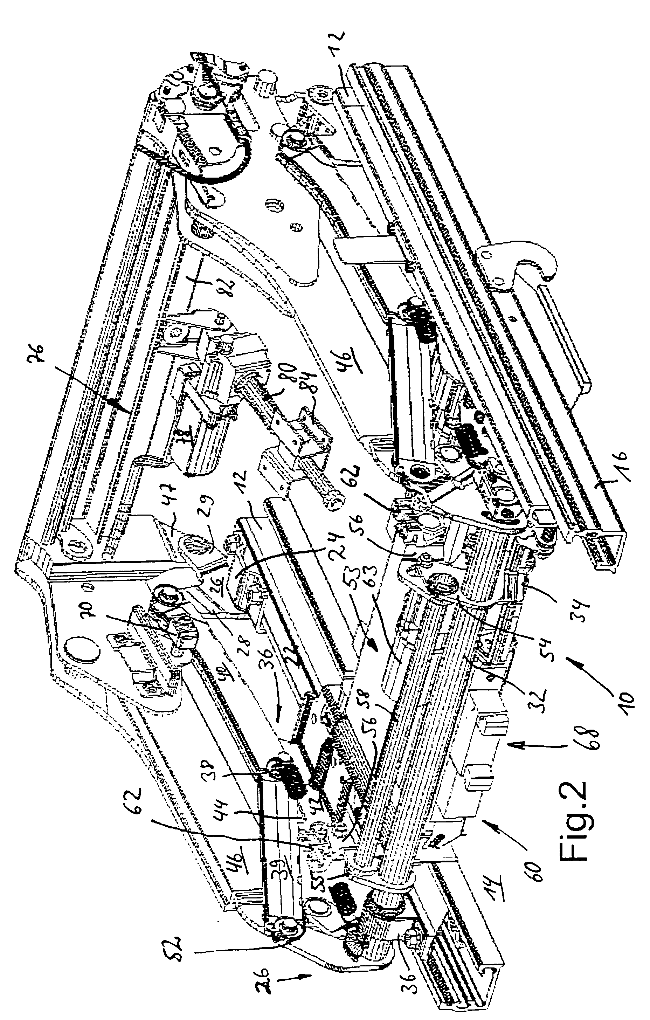

In den Fig.1 und 2 ist in Perspektivansicht ein Sitzuntergestell 10 eines Fahrzeugsitzes gezeigt, dessen Tragschienen 12 zur Längsverstellung des Fahrzeugsitzes in zwei parallel zueinander verlaufenden, am Fahrzeugboden 14 befestigten Führungsschienen 16 längsverstell- und arretierbar geführt sind. Hierzu ist zwischen den Tragschienen 12 eine über einen Getriebemotor 18 anzutreibende und zu sperrende Welle 20 vorgesehen, die an den Tragschienen 12 gelagert ist und an deren Enden nicht sichtbare Zahnräder befestigt sind, die mit an den Führungsschienen 16 befestigten, nicht sichtbaren Zahnstangen in Eingriff stehen.

Im hinteren Bereich der Tragschienen 12 ist an deren Oberseite 22 jeweils ein hinterer Lagerbock 24 befestigt. An den hinteren Lagerböcken 24 ist jeweils ein Lenkerhebel 26 verschwenkbar gelagert, der etwa V-förmig mit jeweils einem vorderen und einem hinteren Lenkerarm 28,29 ausgebildet ist. Im vorderen Bereich jeder Tragschiene 12 ist an deren Oberseite 22 ein vorderer Lagerbock 36 mit Hilfe von jeweils zwei Schraubverbindungen festgelegt. In den vorderen Lagerböcken 36 ist eine Querstange 32 drehbar aufgenommen, an deren Enden zwei Lenkerhebel 26 befestigt sind, die im wesentlichen gleich den hinteren, bereits beschriebenen Lenkerhebel 26 gestaltet sind. Die Querstange 32 ist durch einen Getriebemotor 34 zur Höheneinstellung zu verdrehen und zu sperren, der an der von vorne gesehen rechten Tragschiene 12 befestigt ist.

Die jeweils vorderen Lenkerarme 28 der einander seitlich zugeordneten vorderen und hinteren Lenkerhebel 26 sind über jeweils eine Koppelschwinge 36 miteinander verbunden. Die Koppelschwinge 36 umfaßt zwei durch ein Zwischengelenk 38 gelenkig miteinander verbundene Koppelarme 39,40, wobei der vordere Koppelarm 39 an dem jeweils vorderen Lenkerhebel 26 und der hintere Koppelarm 40 an dem jeweils hinteren Lenkerhebel 26 angelenkt ist. Etwa mittig der beiden Tragschienen 12 ist an deren Oberseite 22 jeweils eine im wesentlichen winkelförmige Gelenkführung 42 mit einem etwa waagerecht verlaufenden Langloch 44 befestigt, in dem das Zwischengelenk 38 linear verschiebegeführt und die Koppelschwinge 36 an der zugeordneten Tragschiene 12 des Sitzuntergestells 10 abgestützt ist.

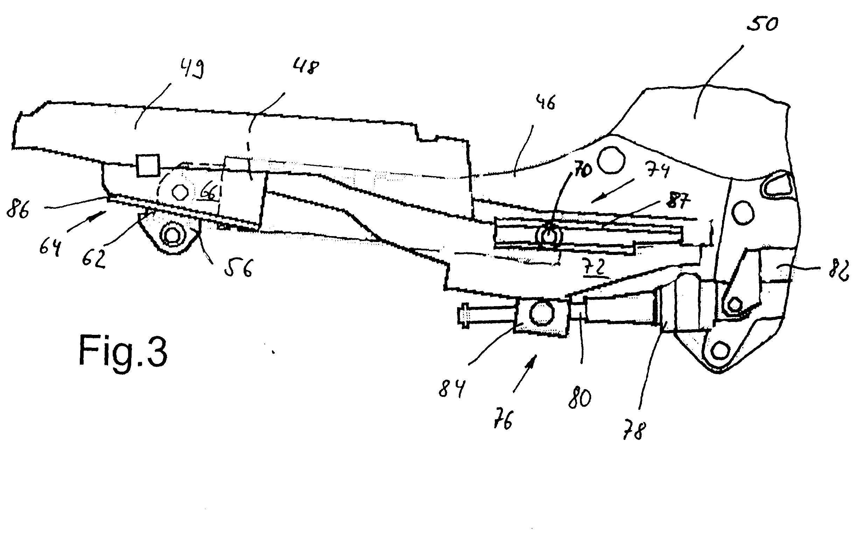

Gegenüber Fig.1 ist in Fig.2 zusätzlich ein in Draufsicht etwa U-förmiger Sitzrahmen 46 des Fahrzeugsitzes dargestellt, an dem ein Sitzkissentragteil 48 (Fig.3) sowie ein Rückenlehnenteil 50 (Fig.3) angeordnet sind. Das Sitzkissentragteil 48 ist dabei als einteiliges, flaches Bauteil zur Aufnahme eines Sitzkissens 49 (Fig.3) ausgebildet. Die hinteren Lenkerhebel 26 sind über deren hintere Lenkerarme 29 gelenkig mit nach unten abstehenden, dreieckigen Aufnahmen 47 des Sitzrahmens 46 verbunden. Die vorderen Lenkerhebel 26 sind mit deren hinteren Lenkerarmen 29 über jeweils einen Ausgleichslenker 52 mit dem vorderen Ende des Sitzrahmens 46 verbunden. Der Ausgleichslenker 52 dient dabei insbesondere zum Ausgleichen von auf den Sitzrahmen 46 einwirkenden Kräften.

Der Fahrzeugsitz ist sowohl in Fig.1 als auch in Fig.2 in seiner annähernd tiefsten Position dargestellt, wobei das Zwischengelenk 38 etwa in seiner hintersten Stellung in dem Langloch 44 der Gelenkführung 42 liegt. Zum Verstellen des Fahrzeugsitzes in eine höhere Position wird die durch den Getriebemotor 34 angetriebene und zu sperrende Querstange 32 entsprechend in Richtung gegen den Uhrzeigersinn gedreht, wodurch die mit der Querstange 32 fest verbundenen vorderen Lenkerhebel 26 und über die Koppelschwinge 36 auch die hinteren Lenkerhebel 26 in Richtung gegen den Uhrzeigersinn verschwenkt werden. Mit anderen Worten wird der Sitzrahmen 46 vorne und hinten gleichermaßen gegenüber dem Sitzuntergestell 10 nach oben oder unten bewegt wird. In der schließlich eingestellten Höhenlage ist der Sitzrahmen 46 bzw. das Sitzkissentragteil 48 und das Rückenlehnenteil 50 durch den dann gesperrten Getriebemotor 34 festgelegt.

Wie insbesondere in Fig.1 erkennbar, ist das Sitzuntergestell 10 etwa U-förmig ausgebildet mit den seitlich angeordneten Tragschienen 12, Lenkerhebeln 26 sowie den Koppelschwingen 36, und den vorne quer verlaufenden Antriebseinheiten zur Längs-, Höhen- und Neigungsverstellung des Sitzkissentragteils 48. Somit ergibt sich insgesamt eine Ausgestaltung des Sitzuntergestells 10, die einen großen Fußfreiraum für eine hinter dem Fahrzeugsitz sitzende Person bietet.

Von der Querstange 32 stehen zwei drehfest mit ihr verbundene, einer Neigungsverstelleinrichtung 53 des Sitzkissentragteils 48 zugeordnete Aufnahmen 54 ab, an deren Enden 55 jeweils ein Zwischenlenker 56 verschwenkbar angeordnet ist. Hierzu sind die beiden zwischenlenker 56 über eine mit diesen fest verbundene weitere Querstange 58 drehgekoppelt, wobei die weitere Querstange 58 an den Aufnahmen 54 drehbar gelagert ist. Die Querstange 32, die weitere Querstange 58 und die beiden Aufnahmen 54 bilden somit insgesamt eine etwa rechtwinklige Rahmenschwinge 60, die bei einer Höhenverstellung des Sitzrahmens 46 entsprechend um die Querstange 32 mitverdreht wird. Die beiden Zwischenlenker 56 sind spiegelsymmetrisch nach außen gekröpft ausgebildet und über einen gemeinsamen Getriebemotor 63 gegenüber den Aufnahmen 54 bzw. der Querstange 32 verschwenkbar und sperrbar, der an der hier von vorne betrachtet rechten Aufnahme 54 fest angeordnet ist. Hierzu weist der rechte Zwischenlenker 56 eine nicht dargestellte kreisbogenförmige Zahnstange auf, die mit einem ebenfalls nicht dargestellten Ritzel des Getriebemotors 63 in Eingriff steht. Jeweils an ihrem der weiteren Querstange 58 abgewandten Ende sind an den Zwischenlenkern 56 vordere Führungsmittel 62 angelenkt, die seitlich innerhalb des Sitzrahmens 46 angeordnet sind. Die Führungsmittel 62 greifen in Führungen 64 (Fig.3) am Sitzkissentragteil 48 und dienen damit einerseits zur Abstützung des vorderen Endbereichs 66 (Fig.3) des Sitzkissentragteils 48 sowie zu dessen Neigungseinstellung und andererseits zur Führung des im weiteren noch näher zu erläuternden, längsverschiebbaren Sitztragteils 48. Insgesamt ist durch die an den Tragschienen 12 angeordnete Querstange 32, durch die Rahmenschwinge 60 und durch die Zwischenlenker 56 eine Stützkonstruktion 68 geschaffen, mit der die schwenkbar an den Zwischenlenkern 56 gelagerten Führungsmittel 62 bzw. der vordere Endbereich 66 des Sitzkissentragteils 48 am Sitzrahmen 46 vorbei direkt am Sitzuntergestell 10 abgestützt ist. Dabei sind die Stützkonstruktion 68 und die Neigungsverstelleinrichtung 53 über die Querstange 32 bei der Höhenverstellung des Sitzrahmens 46 mit diesem mitbewegt. Die Aufnahmen 54 sind so an der Querstange 32 befestigt und die Zwischenlenker 56 so ausgestaltet, daß die vorderen Führungsmittel 62 etwa im Bereich einer Linie liegen, die durch die Verbindung der Achsen der Gelenkstellen 51 zwischen den Ausgleichslenkern 52 und dem vorderen Ende des Sitzrahmens 46 zu konstruieren wäre. Mit anderen Worten hat diese Ausgestaltung der Aufnahmen 54 und der Zwischenlenker 56 zu Folge, daß die Neigungseinstellung des Sitzkissentragteils 48 unabhängig von der Höheneinstellung des Sitzrahmen 46 annähernd gleich bleibt. Die Neigungseinstellung des Sitzkissentragteils 48 erfolgt demnach fast ausschließlich durch das Verschwenken der Zwischenlenker 56.

Seitlich am hinteren Ende des Sitzrahmens 46 sind zwei hintere Führungsmittel 70 gelenkig am Sitzrahmen 46 angeordnet, an denen das Sitzkissentragteil 48 mit einem hinteren Endbereich 72 (Fig.3) verschiebebeweglich in zwei hinteren Führungen 74 gelagert ist. Insgesamt ist das Sitzkissentragteil 48 also über vier Führungen 64,74 zur Sitzkissentiefeneinstellung verschiebebeweglich gelagert, wobei das Sitzkissentragteil 48 über die der hinteren Führung 74 zugeordneten Führungsmittel 70 am Sitzrahmen 46 und über die der vorderen Führung 64 zugeordneten Führungsmittel 62 am Sitzuntergestell 10 abgestützt ist.

Wie den Fig.2 und 3 entnehmbar, ist das Sitzkissentragteil 48 gegenüber dem Sitzrahmen 46 und der Stützkonstruktion 68 mittels eines Spindelantriebs 76 längsverfahrbar und sperrbar. Der Spindelantrieb 76 umfaßt eine durch einen Getriebemotor 78 drehbare Antriebsspindel 80, wobei - wie in Fig.3 ersichtlich - diese beiden Bauteile nahe der Unterseite des hinteren Endbereichs 72 des Sitzkissentragteils 48 an einem Querprofil 82 des Sitzrahmens 46 gelenkig angebracht sind und wobei der Antriebsmotor 78 etwa rechtwinklig zu der in Fahrzeuglängsrichtung verlaufenden Antriebsspindel 80 angeordnet ist. Auf der Antriebsspindel 80 läuft eine Gewindehülse 84, die an der Unterseite des Sitzkissentragteils 48 befestigt ist. Durch die gelenkige Anordnung der Baueinheit von Antriebsspindel 80 und Antriebsmotor 78 an dem Querprofil 82 des Sitzrahmens 46 wird ein verspannungsfreier Lauf der Gewindehülse 84 - unabhängig von der Neigungseinstellung des Sitzkissentragteils 48 - auf der Antriebsspindel 80 gewährleistet.

In Fig.3 sind neben der Anordnung des Spindelantriebs 76 unterhalb des Sitzkissentragteils 48 insbesondere die vorderen und hinteren Führungen 64,74 erkennbar, wobei die vorderen und hinteren Führungsmittel 62,70 sowohl wälzgelagert als auch gleitgelagert in die zugeordneten Längsschienen 86,87 am vorderen bzw. hinteren Endbereich 66,72 des Sitzkissentragteils 48 eingreifen können. Der Spindelantriebs 76 ist in ausreichender Höhe oberhalb des Sitzuntergestells 10 am Sitzrahmen 46 angeordnet, um den bereits beschriebenen Fußfreiraum für einen Fondpassagier nicht zu beeinträchtigen.

## Patentansprüche

1. Fahrzeugsitz mit einem höhenverstellbar oberhalb eines Sitzuntergestells (10) angeordneten Sitzrahmen (46), an dem ein Rückenlehnenteil (50) angebracht ist und ein Sitzkissentragteil (48) zur Einstellung der Sitzkissentiefe mit einem Endbereich (72) verschiebebeweglich in zwei Führungen (74) gelagert ist, wobei der andere Endbereich (66) des Sitzkissentragteils (48) über zwei weitere Führungen (64) abgestützt ist,
**dadurch gekennzeichnet,**
daß die weiteren Führungen (64) über eine Stützkonstruktion (68) unter Umgehung des Sitzrahmens (46) direkt am Sitzuntergestell (10) abgestützt sind.

2. Fahrzeugsitz nach Anspruch 1,
**dadurch gekennzeichnet**,
daß die Stützkonstruktion (68) bei der Höhenverstellung des Fahrzeugsitzes mit dem Sitzrahmen (46) bewegt ist.

3. Fahrzeugsitz nach Anspruch 1,
**dadurch gekennzeichnet**,
daß die Stützkonstruktion (68) im vorderen Endbereich (66) des Sitzkissentragteils (48) angeordnet ist und eine Neigungsverstelleinrichtung (53) umfaßt, mit der die Neigung des Sitzkissentragteils (48) relativ zum Sitzrahmen (46) einstellbar ist.

4. Fahrzeugsitz nach Anspruch 1,
**dadurch gekennzeichnet**,
daß der Sitzrahmen (46) zur Höheneinstellung des Fahrzeugsitzes beidseitig über parallelogrammartig angeordnete Lenkerhebel (26) bewegungsgesteuert ist, wobei die vorderen Lenkerhebel (26) über eine Querstange (32) drehgekoppelt sind und von der Querstange (32) zwei drehfest mit ihr verbundene Aufnahmen (54) abstehen, deren Enden (55) über jeweils einen Zwischenlenker (56) an der zugeordneten Führung (64) des vorderen Endbereichs (66) abgestützt sind.

5. Fahrzeugsitz nach Anspruch 4,
**dadurch gekennzeichnet**,
daß die Aufnahmen (54) über eine weitere Querstange (58) miteinander verbunden sind, wodurch die Querstange (32), die weitere Querstange (58) und die Aufnahmen (54) eine rechtwinklige Rahmenschwinge (60) bilden.

6. Fahrzeugsitz nach Anspruch 5,
**dadurch gekennzeichnet**,
daß die Zwischenlenker (56) über die weitere Querstange (58) drehgekoppelt sind und daß ein Antriebsmotor (Getriebemotor 63) an der Rahmenschwinge (60) befestigt ist, mit der die Zwischenlenker (56) relativ zu den Aufnahmen (54) verschwenkbar sind.

7. Fahrzeugsitz nach Anspruch 4,
**dadurch gekennzeichnet**,
daß die Zwischenlenker (56) spiegelsymmetrisch ausgebildet und nach außen gekröpft sind.

8. Fahrzeugsitz nach Anspruch 1,
**dadurch gekennzeichnet**,
daß das Sitzkissentragteil (48) gegenüber dem Sitzrahmen (46) und der Stützkonstruktion (68) verschiebbar und mittels eines Spindelantriebs (76) längsverfahrbar ist.

9. Fahrzeugsitz nach Anspruch 8,
**dadurch gekennzeichnet**,
daß auf einer motorisch drehbaren Antriebsspindel (80) eine Gewindehülse (84) läuft, die an der Unterseite des Sitzkissentragteils (48) befestigt ist.

10. Fahrzeugsitz nach Anspruch 9,
**dadurch gekennzeichnet**,
daß der Antriebsmotor (78) und Antriebsspindel (80) nahe der Unterseite vom hinteren Endbereich (72) des Sitzkissentragteils (48) angebracht sind, wobei der Antriebsmotor (78) etwa rechtwinklig zu der Antriebsspindel (80) angeordnet ist.
